**Europäisches Patentamt**

**European Patent Office**

**Office européen des brevets**

(19)

(11) Veröffentlichungsnummer: **0 010 720**
**A1**

# (12) EUROPÄISCHE PATENTANMELDUNG

(21) Anmeldenummer: **79104095.9**

(22) Anmeldetag: **22.10.79**

(51) Int. Cl.³: **H 04 Q 3/00, H 04 Q 11/04**

(30) Priorität: **27.10.78 DE 2846934**

(43) Veröffentlichungstag der Anmeldung: **14.05.80**
**Patentblatt 80/10**

(84) Benannte Vertragsstaaten: **AT BE CH DE FR GB IT LU
NL SE**

(71) Anmelder: **SIEMENS AKTIENGESELLSCHAFT Berlin
und München, Postfach 22 02 61, D-8000
München 22 (DE)**

(72) Erfinder: **von Pfeil, Dirsko, Dammstrasse 14, D-8021
Hohenschäftlarn (DE)**

(54) **Vollelektronische Schleifenschlussschaltung.**

(57) Die Erfindung bezieht sich auf eine vollelektronische Schleifenschlussschaltung. Werden Teilnehmeranschlussleitungen durch Multiplexsystem verlängert, dann muss eine vermittlungsseitige Endschaltung der Vermittlungsstelle Schleifenschlusssignale senden, ohne dadurch die Sprechströme zu bedämpfen. Dies soll hierbei ohne Verwendung eines Relaiskontaktes geschehen. Die Erfindung sieht hierzu vor, zwischen den beiden Adern einer Teilnehmerleitung einen Konstantstromverbraucher anzuordnen, der von einem Optokoppler abhängig von der Steuerung des Teilnehmerapparates an die Teilnehmerleitung an- bzw. abschaltbar ist. Eine erfindungsgemässe vollelektronische Schleifenschlussschaltung ist insbesondere für den Einsatz in amtsseitigen Endschaltungen und Konzentratoren im NF-Bereich von TF-Systemen geeignet.

SIEMENS AKTIENGESELLSCHAFT          Unser Zeichen:
Berlin und München                  VPA  78 P 6 7 7 6

Vollelektronische Schleifenschlußschaltung

Die Erfindung betrifft eine vollelektronische Schleifenschlußschaltung.

Werden Teilnehmeranschlußleitungen durch Multiplexsysteme verlängert, dann muß eine vermittlungsseitige
Endschaltung der Vermittlungsstelle Schleifenschlußsignale senden, ohne dadurch die Sprechströme zu bedämpfen.

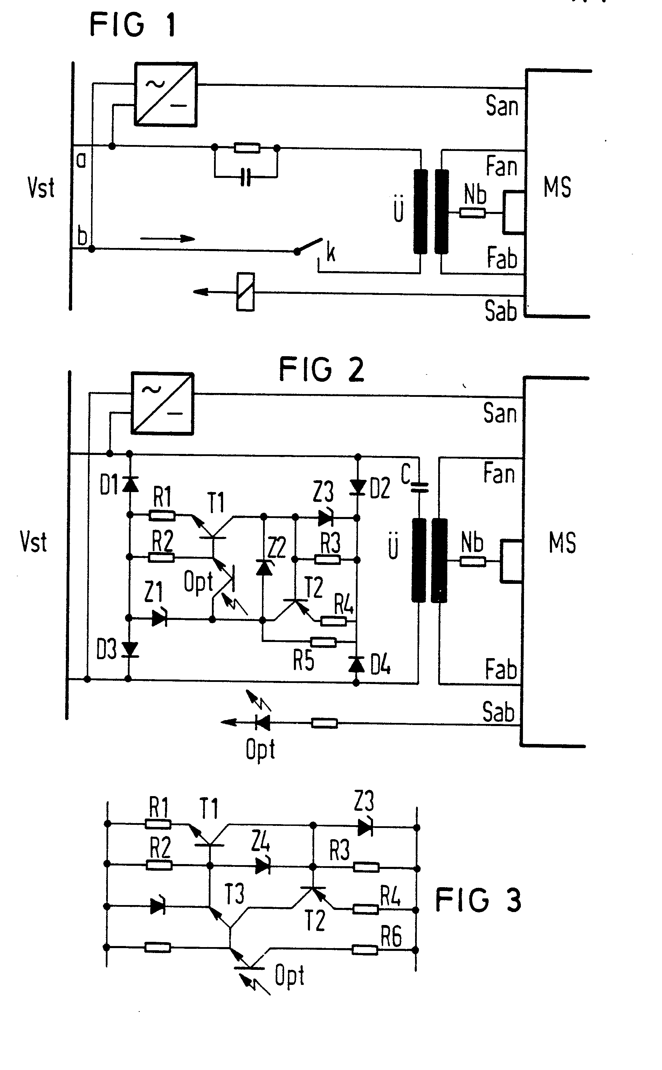

Das Schleifenschlußsignal wird in bekannten vermittlungsseitigen Endschaltungen wie in Fig. 1 gezeigt, dadurch
nachgebildet, daß über einen Relaiskontakt K eine Induktivität parallel zu den Sprechadern geschaltet wird.
Dabei kann die Induktivität eine Drosselspule oder aber
ein Gabelübertrager Ü sein. Ungünstig an dieser Schaltung ist die Verwendung eines Relais und wegen des Gleichstromes, der über die Induktivität fließt, eine relativ große Spule.

27. Okt. 1978 - Zk 1 Wis

Aufgabe der vorliegenden Erfindung ist es, eine Schleifenschlußschaltung ohne Relaiskontakt zu schaffen.

Zur Lösung dieser Aufgabe wird die Schleifenschlußschaltung derart ausgebildet, daß zwischen den beiden Adern einer Teilnehmerleitung ein Konstantstromverbraucher angeordnet ist, der von einem Optokoppler, der über den Teilnehmerapparat des Teilnehmers gesteuert wird, an die Teilnehmerleitung an- bzw. abschaltbar ist.

Durch diese Maßnahmen wird ein Relais vermieden. Gleichzeitig kann die parallel zu den Sprechadern geschaltete Induktivität verkleinert werden, da sie keinen Gleichstromanteil mehr aufnehmen muß.

Der Konstantstromverbraucher besteht dabei im wesentlichen aus zwei Transistoren, deren Kollektoren und Basen wechselseitig miteinander über ein Steuerelement verbunden sind und deren Emitter die Ein- bzw. Ausgangsklemmen eines so aufgebauten Zweipols bilden.

In weiterer Ausgestaltung kann das Steuerelement ein Transistor eines Optokopplers sein, dessen Emitter-Kollektor-Strecke zwischen der Basis des einen und Kollektor des anderen Transistors angeordnet ist, wobei die Emitter-Kollektorstrecke des anderen Transistors mit einem weiteren ohmschen Widerstand verbunden ist.

Diese Schaltung hat den Vorteil geringeren Aufwandes und einer geringeren Spannungsbelastung des Transistors im Optokoppler die maximal $U_{Z1}$ ist.

Weiterhin läßt sich die Schleifenschlußschaltung auch so ausbilden, daß zwischen der Basis des einen Transistors und dem Kollektor des anderen Transistors die Emitter-Kollektorstrecke eines dritten Transistors, dessen Basis mit dem Emitter des Transistors des Optokopplers verbunden ist, der mit seinem Kollektor über einen ohmschen Widerstand an dem Emitter des anderen Transistors liegt.

Bei dieser Anordnung fließt im Ruhezustand kein Fehlstrom. Auch hier schaltet der Optokoppler über einen Darlingthon Transistor den Konstantstromverbraucher ein und aus.

In den Emitterbasiskreis der beiden Transistoren sind Zenerdioden angeordnet. Sie dienen dazu, im durchgesteuerten Zustand eine konstante Basisspannung zu erzeugen, so daß zusammen mit den Emitterwiderständen über die Transisoren Konstantstrom fließt. Die in den Emitterbasiskreisen angeordneten ohmschen Widerstände sollen den Reststrom der Transistoren im gesperrten Zustand verringern.

Zwischen den beiden Kollektoren der beiden Transistren kann ebenfalls eine Zenerdiode angeordnet sein. Sie kann aber auch zwischen den beiden Basen der beiden Transistoren liegen, wenn es sich um die zweite Ausgestaltungsform des Konstantstromverbrauchers handelt. Sie hat die Aufgabe die Transistoren vor Überspannungen auf der Teilnehmerleitung zu schützen.

Um den Konstantstromverbraucher unabhängig von der Polarität auf den Adern der Teilnehmerleitung anschalten zu können, können die beiden Emitter der beiden Transistoren im Verbindungspunkt jeweils zweier entgegengesetzt in Reihe geschalteter Dioden liegen, deren jeweils andere Anschlüsse an je eine Ader der Teilnehmerschaltung geführt sind.

Anhand der Schaltungsanordnung nach den Fig. 2 und 3 wird die Erfindung näher erläutert.

Fig. 2 zeigt dabei eine erste Ausführungsform des Konstantstromverbrauchers. Die Transistoren T1 und T2 sind wechselseitig mit ihren Basen und Kollektoren gekoppelt, wobei zwischen der Basis des einen Transistors T1 und dem Kollektor des Transistors T2 die Emitter-Kollektorstrecke des Transistors OPT des Optokopplers liegt. Im Kollektorkreis der Transistoren T1 und T2 liegen die Zenerdioden Z1 und Z3. Die ohmschen Widerstände R1 und R4 liegen in Reihe zu den Emittern der Transistoren T1, T2, während die ohmschen Widerstände R2, R3 zwischen Basis und dem einen Pol der Emitterwiderstände angeschaltet sind. Die gesamte Schaltung ist über Dioden D1 bis D4 jeweils an ihren Eckpunkten mit den beiden Adern der Teilnehmerleitung verbunden.

Eine andere Art der Ansteuerung zeigt die Fig. 1. Hier liegt ein dritter Transistor T3 mit seiner Emitter-Kollektorstrecke zwischen Kollektor des zweiten Transistors T2 und Basis des ersten Transistors T1. Die Basis dieses dritten Transistors T3 wird vom Emitter des Transistors OPT des Optokopplers angesteuert, dessen Kollektor über einen ohmschen Widerstand R6 an den Emitterwiderstand R4 des Transistors T2 geführt ist.

Die Dioden D1-D4 ermöglichen die Schaltung mit beliebiger Polung an die Vermittlungsstelle VSt anzuschließen. Im Zustand "Schleife geöffnet" sind die Transistoren T1 und T2 hochohmig, es fließt nur ein Fehlstrom <0,1 mA über Z1 und R5. Legt das Multiplexsystem Erde an die Signalader S ab, dann wird der Transistor des Optokopplers OPT und damit der eine Transistor T1 leitend

0010720

(Strom über Widerstand R5, Optokoppler OPT, Basis-Emitterstrecke des Transistors T1 und ohmscher Widerstand R1). Der Stromfluß über den Transistor T1 macht wiederum den Transistor T2 leitend (Strom über den ohmschen Widerstand R4, der Basis-Emitterstrecke des Transistors T2, R1). Die Transistoren T1 und T2 liefern sich nun gegenseitig Basisstrom. Der Emitterstrom des Transistors T1 bzw. T2 beträgt

$$I_{ET1} = \frac{U_{Z2} - 0,6\ V}{R1} \quad ; \quad I_{ET2} = \frac{U_{Z3} - 0,6\ V}{R4}$$

Die Kollektorströme der Transistoren T1, T2 entsprechen nahezu den Emitterströmen ($I_C + I_B$ ; $I_B \ll I_C$) und da $U_{Z1}$, $U_{Z2}$, $R_1$, $R_4$ Konstante sind, addieren sich die beiden Kollektorströme zu einem Konstantstromverbraucher. Der wirksame Widerstand für Sprechströme beträgt daher:

$$R = \frac{\Delta U}{\Delta I} \quad ; \quad I = \text{Konstant} \ ; \ \Delta I = 0 \ ; \ R = \frac{\Delta U}{0} = \infty$$

Dabei wurde der Widerstand R5 vernachlässigt, da er größer ist als 100 k$\Omega$. Wenn der Optokoppler wieder sperrt, sperren auch die Transistoren T1 und T2. Die Widerstände R2 und R3 vermindern die Restströme. Die Zenerdioden Z2 bzw. Z4 begrenzen unzulässig hohe Spannungen zwischen a- und b-Ader. Der Kondensator C sperrt einen Gleichstrom durch den Übertrager Ü. Er bildet zusammen mit dem Übertrager einen Hochpaß.

9 Patentansprüche

3 Figuren

Patentansprüche

1. Vollelektronische Schleifenschlußschaltung, d a - d u r c h g e k e n n z e i c h n e t , daß zwischen den beiden Adern einer Teilnehmerleitung ein Konstantstromverbraucher angeordnet ist, der von einem Optokoppler, der über den Teilnehmerapparat des Teilnehmers gesteuert wird, an die Teilnehmerleitung an- bzw. abschaltbar ist.

2. Vollelektronische Schleifenschlußschaltung nach Anspruch 1, d a d u r c h g e k e n n z e i c h - n e t , daß der Konstantstromverbraucher im wesentlichen aus zwei Transistoren besteht, deren Kollektoren und Basen wechselseitig miteinander über ein Steuerelement verbunden sind und deren Emitter die Ein- bzw. Ausgangsklemmen eines so aufgebauten Zweipols bilden.

3. Vollelektronische Schleifenschlußschaltung nach Anspruch 2, d a d u r c h g e k e n n z e i c h - n e t , daß das Steuerelement ein Transistor (OPT) eines Optokopplers ist, dessen Emitter-Kollektor-Strecke zwischen der Basis des einen (T1) und Kollektor des anderen Transistors (T2) angeordnet ist, wobei die Emitter-Kollektorstrecke des anderen Transistors (T2) mit einem weiteren ohmschen Widerstand (R5) verbunden ist.

4. Vollelektronische Schleifenschlußschaltung nach Anspruch 2, d a d u r c h g e k e n n z e i c h - n e t , daß zwischen der Basis des einen Transistors (T1) und dem Kollektor des anderen Transistors (T2) die Emitter-Kollektorstrecke eines dritten Transistors (T3), dessen Basis mit dem Emitter des Transistors (OPT) des

Optokopplers verbunden ist, der mit seinem Kollektor
über einen ohmschen Widerstand (R6) an dem Emitter
des anderen Transistors (T2) liegt.

5. Vollelektronische Schleifenschlußschaltung nach
einem der Ansprüche 2 bis 4, d a d u r c h
g e k e n n z e i c h n e t , daß im Emitter-Basiskreis
der beiden Transistoren (T1, T2) Zenerdioden (Z1, Z3) angeordnet sind.

6. Vollelektronische Schleifenschlußschaltung nach
einem der Ansprüche 2 bis 5, d a d u r c h g e -
k e n n z e i c h n e t , daß im Emitterbasiskreis
ohmsche Widerstände (R1, R2, R3, R4) angeordnet sind.

7. Vollelektronische Schleifenschlußschaltung nach
einem der Ansprüche 2 oder 3, d a d u r c h g e -
k e n n z e i c h n e t, daß zwischen den beiden
Kollektoren der beiden Transistoren (T1, T2) eine Zenerdiode (Z2) angeordnet ist.

8. Vollelektronische Schleifenschlußschaltung nach
einem der Ansprüche 2 oder 3, d a d u r c h
g e k e n n z e i c h n e t , daß zwischen den beiden
Basen der beiden Transistoren (T1, T2) eine Zenerdiode
(Z4) angeordnet ist.

9. Vollelektronische Schleifenschlußschaltung nach
einem der Ansprüche 2 bis 8, d a d u r c h g e -
k e n n z e i c h n e t , daß die beiden Emitter der
beiden Transistoren (T1; T2) im Verbindungspunkt jeweisl zweier entgegengesetzt in Reihe geschalteter
Dioden (D1, D3; D2, D4) liegen, deren jeweils andere
Anschlüsse an je eine Ader der Teilnehmerschaltung geführt sind.

FIG 1

FIG 2

FIG 3

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| X | US - A - 4 105 872 (PARISE) <br> * Spalte 12, Zeile 59 bis Spalte 13, Zeile 17; Spalte 15, Zeile 12 bis Spalte 16, Zeile 3 * <br> -- | 1-6,9 |
| | FR - A - 2 251 975 (L.C.T.) <br> * Seite 2, Zeilen 27-34; Seite 4, Zeile 25 bis Seite 5, Zeile 35 * <br> -- | 1,3,5, 6,9 |
| | HASLER MITTEILUNGEN, Band 35, Nr. 2, Juni 1976, <br> Berne, <br> H.R. GESSLER et al.: "Praktische Beispiele von Kennzeichenumsetzern zwischen PCM-Ausrüstungen und elektromechanischen Telefonzentralen", Seiten 38-42 <br> * Seite 38, linke Spalte, Zeile 1 bis Seite 39, linke Spalte, Zeile 2; Seite 40, linke Spalte Zeile 33 bis rechte Spalte, Zeile 4 * <br> -- | 1,3,6 |
| | FR - A - 2 372 563 (ERICSSON) <br> * Seite 5, Zeilen 4-37; Seite 7, Zeile 9 bis Seite 8, Zeile 31 * <br> -- | 1,3,6, 9 |
| | US - A - 3 766 325 (HATFIELD) <br> * Spalte 6, Zeilen 16-35; Spalte 10, Zeilen 5-19 * <br> -- | 1,3,5, 6,9 |
| | FR - A - 2 326 100 (ERICSSON) <br> ./. | 1,3,9 |

**KLASSIFIKATION DER ANMELDUNG (Int.Cl. 3)**

H 04 Q 3/00
11/04

**RECHERCHIERTE SACHGEBIETE (Int. Cl. 3)**

H 04 Q

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

Der vorliegende Recherchenbericht wurde für alle Patentansprüche erstellt.

| Recherchenort | Abschlußdatum der Recherche | Prüfer |
|---|---|---|
| Den Haag | 25-01-1980 | VERSLYPE |

EPA form 1503.1 06.78

| | EINSCHLÄGIGE DOKUMENTE | | KLASSIFIKATION DER ANMELDUNG (Int.Cl. 3) |
|---|---|---|---|
| Kategorie | Kennzeichnung des Dokuments mit Angabe, soweit erforderlich, der maßgeblichen Teile | betrifft Anspruch | |
| | * Seite 4, Zeile 12 bis Seite 5, Zeile 5 * | | |
| | -- | | |
| PE | GB - A - 2 012 143 (INTERNATIONAL STANDARD ELECTRIC) * Seite 1, Zeile 90 bis Seite 2, Zeile 13 * | 1-3,6, 9 | |
| | ---- | | |
| | | | RECHERCHIERTE SACHGEBIETE (Int. Cl. 3) |